# NEUE EUROPÄISCHE PATENTSCHRIFT

(11) **EP 1 288 595 B2**
(45) Veröffentlichungstag und Bekanntmachung des Hinweises auf die Entscheidung über den Einspruch: **12.05.2010**
(45) Hinweis auf die Patenterteilung: 08.02.2006
(21) Anmeldenummer: 02017401.7
(22) Anmeldetag: 02.08.2002
(51) Int. Cl.: F25B 49/02

(54) **Verdichtersatz und Verfahren zum Regeln eines Verdichtersatzes**
Compressor set and method of controlling a compressor set
Ensemble de compresseurs et procédé de commande d'un ensemble de compresseurs

(30) Priorität: 27.08.2001 DE 10141857
(43) Veröffentlichungstag der Anmeldung: 05.03.2003
(73) Patentinhaber: Carrier Kältetechnik Deutschland GmbH, 50999 Köln (DE)
(72) Erfinder: Schierhorn, Uwe, 50389 Wesseling (DE); Olejnik, Janusz, 50670 Köln (DE)
(74) Vertreter: Klunker . Schmitt-Nilson . Hirsch

(56) Entgegenhaltungen:
- EP-A- 1 249 675
- US-A- 5 211 031
- US-A- 5 522 707
- PATENT ABSTRACTS OF JAPAN vol. 011, no. 114 (M-579), 10. April 1987 (1987-04-10) & JP 61 259045 A (MITSUBISHI ELECTRIC CORP), 17. November 1986 (1986-11-17)
- PATENT ABSTRACTS OF JAPAN vol. 009, no. 098 (M-375), 27. April 1985 (1985-04-27) & JP 59 221546 A (TOSHIBA KK), 13. Dezember 1984 (1984-12-13)
- PATENT ABSTRACTS OF JAPAN vol. 2000, no. 18, 5. Juni 2001 (2001-06-05) & JP 01 057055 A (TOSHIBA CORP), 3. März 1989 (1989-03-03)
- PATENT ABSTRACTS OF JAPAN vol. 014, no. 091 (M-0938), 20. Februar 1990 (1990-02-20) & JP 01 302071 A (MITSUBISHI ELECTRIC CORP), 6. Dezember 1989 (1989-12-06)
- PATENT ABSTRACTS OF JAPAN vol. 008, no. 267 (M-343), 7. Dezember 1984 (1984-12-07) & JP 59 140120 A (HITACHI SEISAKUSHO KK), 11. August 1984 (1984-08-11)
- HORST PETER WURM: 'Frequenzumrichter mit Feldbusanschluss' DIE KÄLTE & KLIMATECHNIK Bd. 6, 01 Juni 2000, REMSCHEID, Seiten 46 - 58
- A.F.: 'Invertergeregelte Verbundanlagen mit WRG' DIE KÄLTE & KLIMATECHNIK Bd. 8, 01 August 1999, Seiten 36 - 42
- STEPHAN BRAND UND GÜNTER SEIDEL: 'Schraubenverdichter in vertikaler Bauart' DIE KÄLTE & KLIMATECHNIK Bd. 8, 01 August 2000, AERZEN, Seiten 32 - 35

## Beschreibung

Die Erfindung betrifft ein Verfahren zum Regeln eines Verdichtersatzes, bestehend aus wenigstens zwei, von Elektromotoren angetriebenen Verdichtem.

Ferner betrifft die Erfindung einen Verdichtersatz, bestehend aus wenigstens zwei, von Elektromotoren angetriebenen Verdichtern. Ein darartiger Verdichtersatz gemäß des Oberbegriffes des Anspruchs 9 ist zum Beispiel aus der JP-6 125 9045 oder JP-59221546 bekannt.

In gewerblichen und industriellen Kälte-, Klima- und Wärmepumpenanlagen kommen zur Erzeugung der erforderlichen Kälteleistung u. a. Verdichter zum Einsatz. Diese Verdichter werden im Regelfall von Elektromotoren angetrieben. Abhängig von der Größe der Kälte- oder Klimaanlage können auch mehrere Verdichter erforderlich sein, die dann zu einem sog. Verdichtersatz zusammengeschaltet werden.

Bei der Verwendung dieser Verdichtersätze tritt jedoch das Problem auf, dass zum einen die Verdichterleistung an den tageszeitlich stark schwankenden Bedarf angepasst werden muss und zum anderen auch während kurzzeitiger Bedarfsspitzen die für die Kältebereitstellung erforderliche Verdichterleistung erbracht werden muss; Gleiches gilt selbstverständlich auch für den Betrieb von Klima- und Wärmepumpenanlagen.

Um dem vorgenannten Problem zu begegnen, werden im Wesentlichen zwei unterschiedliche Lösungen angewandt. Zum einen wird jedem Verdichter innerhalb des Verdichtersatzes ein eigener Frequenzumrichter zugeordnet. Diese Methode weist zwar eine gute Teillastrate auf, hat jedoch den Nachteil, dass die Investitionskosten vergleichsweise hoch sind. Zum anderen kommen Verdichtersätze zum Einsatz, die aus zwei oder mehreren unterschiedlichen Verdichtern bestehen, wobei jedoch lediglich einer der Verdichter mittels eines Frequenzumrichters drehzahlgeregelt betrieben wird.

Nachteilig bei dieser Verfahrensweise ist jedoch, dass die Verdichter unterschiedlich lange betrieben werden und damit einem unterschiedlichen Verschleiß unterliegen.

Des Weiteren weist diese Methode eine geringere Betriebssicherheit auf. Ferner ist eine Grundlastumschaltung nicht möglich.
In Wurm, Horst Peter: "Frequenzumrichter mit Feldbusanschluß", DIE KÄLTE & Klimatechnik 6/2000 wird ein Verfahren zum Regeln eines Verdichtersatzes bzw. ein Verdichtersatz beschrieben, wobei zur Verbesserung der Regeleigenschaften beide Verdichter mit je einem Frequenzumrichter gespeist werden. Um den Stellbereich weiter auszudehnen, sind entweder weitere Verdichter mit je einem zugehörigen Frequenzumrichter oder zumindest stufig zugeschaltete Verdichter erforderlich.

Aufgabe der vorliegenden Erfindung ist es, ein gattungsgemäßes Verfahren zum Regeln eines Verdichtersatzes sowie einen gattungsgemäßen Verdichtersatz anzugeben, das bzw. der die vorgenannten Nachteile vermeidet und darüber hinaus eine Teillastrate von wenigstens 20 % gewährleisten kann.

Zur Lösung dieser Aufgabe wird ein gattungsgemäßes Verfahren zum Regeln eines Verdichtersatzes und ein Verdichtersatz gemäß Patentansprüchen 1 und 9 vorgeschlagen.

Der erfindungsgemäße Verdichtersatz, bestehend aus wenigstens zwei, von Elektromotoren angetriebenen Verdichtern, zeichnet sich in einem ersten Aspekt dadurch aus, dass wenigstens ein Frequenzumrichter vorgesehen ist, der den Elektromotor eines Verdichters in Dreieckschaltung mindestens über die Netzfrequenz drehen kann.

Die Elektromotoren der Verdichter sind hierzu in Dreieckschaltung anzuschließen. Der Frequenzumrichter vermindert bei Netzfrequenz die eingangsseitige, verkettete Spannung des Netzes zwischen den Phasen um den Faktor "Wurzel-aus-Drei" an seinem Ausgang, z. B. von 400 Volt auf 230 Volt. Da der Frequenzumrichter in einem weiteren Aspekt eine konstante Spannungs-Frequenz-Kennlinie besitzt, wird durch das anschließende Hochfahren der Ausgangsfrequenz von der Netzfrequenz auf die maximale Frequenz, z. B. von 50 Hz auf 87 Hz, folglich die Ausgangsspannung von z. B. 230 Volt auf 400 Volt ansteigen.

Die Erfindung weiterbildend wird vorgeschlagen, dass die Verdichter identisch sind.

Der Begriff "identisch" bedeutet hierbei, dass die Verdichter ein identisches Förderverhalten aufweisen. Dies ist dann der Fall, wenn der reale saug- oder druckseitige Förderstrom unter gleichen äußeren Bedingungen und jeweils bei gleicher minimaler Frequenz, maximaler Frequenz oder Netzfrequenz von Verdichter zu Verdichter nicht mehr als 10 % abweicht.

Die Verwendung identischer Verdichter führt zu einer deutlichen Kosteneinsparung, da die Lagerhaltung - dies gilt auch für die erforderlichen Ersatzteile - minimiert werden kann. Sofern diese Verdichter in gleichem Umfange betrieben werden, unterliegen sie einem ähnlichen Verschleiß, so dass die regelmäßig erforderlichen Wartungsarbeiten jeweils an allen Verdichtern gleichzeitig durchgeführt werden können.

Das erfindungsgemäße Verfahren zum Regeln eines Verdichtersatzes sowie den erfindungsgemäßen Verdichtersatz weiterbildend wird vorgeschlagen, dass der oder die vorgesehenen Frequenzumrichter zumindest zeitweise abwechselnd den Verdichtern zugeordnet werden.

Während bei der vorbeschriebenen, dem Stand der Technik entsprechenden Verfahrensweise lediglich ein Verdichter mittels eines Frequenzumrichters drehzahlgeregelt betrieben wird, können nun beide bzw. alle Verdichter - sofem ihnen der Frequenzumrichter zugeordnet ist - drehzahlgeregelt betrieben werden.

Das erfindungsgemäße Verfahren zum Regeln eines Verdichtersatzes sowie den erfindungsgemäßen Verdichtersatz weiterbildend wird vorgeschlagen, dass im Falle des Vorsehens von vier oder mehr Verdichtern zwei oder mehr Frequenzumrichter vorgesehen sind und jeder Frequenzumrichter jeweils wenigstens zwei Verdichtern abwechselnd zugeordnet wird.

Prinzipiell kann ein Frequenzumrichter einer beliebigen Anzahl von Verdichtern zugeordnet werden. Bei einem aus bspw. vier oder sechs Verdichtern bestehenden Verdichtersatz kann es jedoch zweckmäßig sein, zwei bzw. drei Frequenzumrichter vorzusehen und jeweils einen Frequenzumrichter einem Verdichterpaar zuzuordnen.

Die abwechselnde Zuordnung eines Frequenzumrichters zu den Verdichtern wird durch eine Steuerung erreicht, wobei die zeitlichen Abstände zwischen der Neuzuordnung des Frequenzumrichters zu einem Verdichter variierbar sein sollten. Dadurch wird erreicht, dass nach einer voreingestellten Zeit mittels der Steuerung ein Grundlastwechsel durchgeführt werden kann, also derjenige Verdichter, der am starren Netz bzw. Festnetz hängt, auf den Frequenzumrichter umgeschaltet wird und umgekehrt. Hierbei beginnt die voreingestellte Zeit beim Stillstand aller zu einem Verdichtersatz zusammengeschalteten Verdichter zu laufen, wobei vorzugsweise dieser Zeitpunkt bzw. Zustand zum Grundlastwechsel genutzt wird.

Des Weiteren ist die Steuerung dahingehend auszulegen, dass über ein auszuregelndes Signal - bspw. den Saugdruck - dem oder den Frequenzumrichtern die einzustellende Frequenz mitgeteilt und die Verdichter bzw. deren Elektromotoren entsprechend angesteuert werden.

Die vorgenannte Steuerung sollte des Weiteren dahingehend ausgelegt sein, dass sie im Falle des Ausfalles eines Verdichters den ausgefallen Verdichter nicht mehr dem oder einem der Frequenzumrichter zuordnet. In einer derartigen Situation müssen der oder die verbleibenden Verdichter durch entsprechendes Hochdrehen mehr (Kälte)Leistung bereitstellen. Fällt der oder einer der Frequenzumrichter aus, so werden die ihm zugeordneten Verdichter entweder mit dem starren Netz bzw. Festnetz verbunden oder einem anderen Frequenzumrichter gemäß dem Prinzip des Anspruchs 1 zugeordnet.

Das erfindungsgemäße Verfahren zum Regeln eines Verdichtersatzes sowie der erfindungsgemäße Verdichtersatz ermöglichen ein Verringerung der Investitionkosten, da zum einen nunmehr baugleiche Verdichter verwendet werden und zum anderen die Zahl der Frequenzumrichter - zumindest verglichen mit einem Verfahren, bei dem jedem Verdichter ein Frequenzumrichter zugeschaltet ist, - verringert wird. Da wenigstens zwei Verdichter eingesetzt werden und der Frequenzumrichter umgangen werden kann, ist zudem die erforderliche Redundanz gegeben.

Aufgrund der erwähnten Grundlastumschaltung lassen sich im Wesentlichen identische Verdichterlaufzeiten und damit einhergehend ein im Wesentlichen identischer Verschleiß der Verdichter realisieren.

Bei einem Verdichtersatz bestehend aus zwei Verdichtern sind im Falle des Ausfalles einer Verdichter/Elektromotor-Einheit noch 60 % der gesamten Leistung vorhanden. Bei einem Ausfall des Frequenzumrichters sind sogar noch ca. 80 % der Leistung realisierbar. Diese Betriebssicherheit übertrifft - ohne Mehrkosten zu verursachen - andere Lösungen, unabhängig davon, ob sie mit oder ohne Drehzahlregelung arbeiten.

Das erfindungsgemäße Verfahren zum Regeln eines Verdichtersatzes sowie der erfindungsgemäße Verdichtersatz ermöglichen die Realisierung einer Teillastrate von wenigstens ≤ 20 %. Sofern mit nur zwei Verdichtern eine niedrigere Teillastrate gewünscht wird, empfiehlt es sich - entsprechend einer weiteren vorteilhaften Ausgestaltung der Erfindung -, dass zumindest einer der Verdichter stufengeregelt, vorzugsweise mittels einer Zylinderabschaltung, betrieben werden kann.

Die Erfindung ist mit allen bekannten Verdichterbauarten, wie bspw. Hubkolben-, Scroll-, Schrauben-, Turboverdichtern, etc. realisierbar. Diese können hierbei hermetisch, halbhermetisch oder offen ausgeführt sein.

## Patentansprüche

1. Verfahren zum Regeln eines Verdichtersatzes, bestehend aus wenigstens zwei, von Elektromotoren angetriebenen Verdichtern, wobei wenigstens ein Frequenzumrichter vorgesehen ist, **dadurch gekennzeichnet, dass** der wenigstens eine Frequenzumrichter den Elektromotor eines der Verdichter in Dreieckschaltung mit konstanter Spannungs-Frequenz-Kennlinie mindestens über die Netzfrequenz drehen kann, und ein anderer der Verdichter am starren Netz betrieben wird, wobei die Zuordnung des Frequenzumrichters zu den Verdichtern abwechselnd durch eine Steuerung erfolgt.

2. Verfahren nach Anspruch 1, **dadurch gekennzeichnet, dass** wenigstens ein Frequenzumrichter vorgesehen ist, der den Elektromotor eines Verdichters bis wenigstens zu dem Wurzel-aus-dem-Dreifachen der Frequenz des starren Netzes drehen kann.

3. Verfahren nach Anspruch 1 oder 2, **dadurch gekennzeichnet, dass** der oder die vorgesehenen Frequenzumrichter zumindest zeitweise abwechselnd den Verdichtern zugeordnet werden.

4. Verfahren nach Anspruch 3, **dadurch gekennzeichnet, dass** im Falle des Vorsehens von vier oder mehr Verdichtern zwei oder mehr Frequenzumrichter vorgesehen sind und jeder Frequenzumrichter jeweils wenigstens zwei Verdichtern abwechselnd zugeordnet wird.

5. Verfahren nach einem der vorhergehenden Ansprüche 1 bis 4, **dadurch gekennzeichnet, dass** die Verdichter identisch sind.

6. Verfahren nach einem der vorhergehenden Ansprüche 1 bis 5, **dadurch gekennzeichnet, dass** bei Ausfall eines Verdichters diesem der Frequenzumrichter nicht mehr zugeordnet wird.

7. Verfahren nach einem der vorhergehenden Ansprüche 1 bis 6, **dadurch gekennzeichnet, dass** bei Ausfall des oder eines Frequenzumrichters die dem ausgefallenen Frequenzumrichter zugeordneten Verdichter mit dem starren Netz verbunden oder einem anderen Frequenzumrichter zugeordnet werden.

8. Verfahren nach einem der vorhergehenden Ansprüche 1 bis 7, **dadurch gekennzeichnet, dass** zumindest einer der Verdichter stufengeregelt, vorzugsweise mittels einer Zylinderabschaltung, betrieben werden kann.

9. Verdichtersatz, bestehend aus wenigstens zwei, von Elektromotoren angetriebenen Verdichtern, wobei wenigstens ein Frequenzumrichter vorgesehen ist, **dadurch gekennzeichnet, dass** der wenigstens eine Frequenzumrichter den Elektromotor eines der Verdichter in Dreieckschaltung mit konstanter Spannungs-Frequenz-Kennlinie mindestens über die Netzfrequenz drehen kann und ein anderer der Verdichter am starren Netz betrieben wird, wobei die Zuordnung des Frequenzumrichters zu den Verdichtern abwechselnd durch eine Steuerung erfolgt.

10. Verdichtersatz nach Anspruch 9, **dadurch gekennzeichnet, dass** wenigstens ein Frequenzumrichter vorgesehen ist, der den Elektromotor eines Verdichters bis wenigstens zu dem Wurzel-aus-dem-Dreifachen der Frequenz des starren Netzes drehen kann.

11. Verdichtersatz nach einem der Ansprüche 9 oder 10, **dadurch gekennzeichnet, dass** der oder die vorgesehenen Frequenzumrichter zumindest zeitweise abwechselnd den Verdichtern zugeordnet werden können.

12. Verdichtersatz nach einem der Ansprüche 9 bis 11, **dadurch gekennzeichnet, dass** im Falle des Vorsehens von vier oder mehr Verdichtern zwei oder mehr Frequenzumrichter vorgesehen sind und jeder Frequenzumrichter jeweils wenigstens zwei Verdichtern abwechselnd zugeordnet werden kann.

13. Verdichtersatz nach einem der Ansprüche 9 bis 12, **dadurch gekennzeichnet, dass** die Verdichter identisch sind.

14. Verdichtersatz nach einem der Ansprüche 9 bis 13, **dadurch gekennzeichnet, dass** wenigstens ein Verdichter, vorzugsweise mittels einer Zylinderabschaltung, stufenregelbar ist.

## Claims

1. Method for controlling a set of compressors consisting of at least two compressors driven by electric motors, with at least one frequency converter being provided, **characterized in that** said at least one frequency converter can turn the electric motor of one of the compressors in delta connection with constant voltage-frequency-characteristic at least over the line frequency and another one of the compressors is operated at the fixed frequency grid, with the allocation of the frequency converter to said compressors being effected in alternating manner by a control.

2. Method according to claim 1, **characterized in that** at least one frequency converter is provided which can turn the electric motor of a compressor at least to the root of the triple of the fixed line frequency.

3. Method according to claim 1 or 2, **characterized in that** the provided frequency converter or frequency converters are at least temporarily alternately allocated to the compressors.

4. Method according to claim 3, **characterized in that** in case four or more compressors are provided, two or more frequency converters are provided and each frequency converter is alternately allocated to at least two respective compressors.

5. Method according to any of claims 1 to 4, **characterized in that** the compressors are identical.

6. Method according to any of claims 1 to 5, **characterized in that** in case of outage of a compressor the frequency converter is no longer allocated to said compressor.

7. Method according to any of claims 1 to 6, **characterized in that** in case of outage of said or any frequency converter the compressor allocated to said outed frequency converter is connected with the fixed frequency grid or allocated to a different frequency converter.

8. Method according to any of claims 1 to 7, **characterized in that** at least one of the compressors can be operated with stepwise control, preferably using a cylinder shutdown.

9. Set of compressors, consisting of at least two compressors driven by electric motors, with at least one frequency converter being provided, **characterized in that** said at least one frequency converter can turn the electric motor of one of the compressors in delta connection with constant voltage-frequency-characteristic at least over the line frequency and another one of the compressors is operated at the fixed frequency grid, with the allocation of the frequency converter to said compressors being effected in alternating manner by a control.

10. Set of compressors according to claim 9, **characterized in that** at least one frequency converter is provided which can turn the electric motor of a compressor at least to the root of the triple of the fixed line frequency.

11. Set of compressors according to one of claims 9 or 10, **characterized in that** the provided frequency converter or frequency converters can be at least temporarily alternately allocated to the compressors.

12. Set of compressors according to any of claims 9 to 11, **characterized in that** in case four or more compressors are provided, two or more frequency converters are provided and each frequency converter can be allocated alternately to at least two respective compressors.

13. Set of compressors according to any of claims 9 to 12, **characterized in that** the compressors are identical.

14. Set of compressors according to any of claims 9 to 13, **characterized in that** at least one compressor can be controlled stepwise, preferably using a cylinder shutoff.

## Revendications

1. Procédé de réglage d'un ensemble de compresseurs, formé par au moins deux compresseurs, actionnés par des moteurs électriques, sachant qu'il est prévu au moins un convertisseur de fréquence, **caractérisé en ce que** ledit au moins un convertisseur de fréquence est apte à faire tourner le moteur électrique de l'un des compresseurs dans un montage en delta avec une ligne caractéristique tension-fréquence constante, au moins à la fréquence du réseau, et un autre des compresseurs est exploité sur le réseau fixe, l'association du convertisseur de fréquence aux compresseurs étant effectuée en alternance par une commande.

2. Procédé selon la revendication 1, **caractérisé en ce qu'**il est prévu au moins un convertisseur de fréquence qui peut faire tourner le moteur électrique d'un compresseur jusqu'à au moins la racine du triple de la fréquence du réseau fixe.

3. Procédé selon la revendication 1 ou 2, **caractérisé en ce que** le ou les convertisseur(s) de fréquence prévu(s) sont au moins temporairement associés en alternance aux compresseurs.

4. Procédé selon la revendication 3, **caractérisé en ce qu'**en cas de présence de quatre compresseurs ou plus, il est prévu deux convertisseurs de fréquence ou plus, et chaque convertisseur de fréquence est associé en alternance à respectivement au moins deux compresseurs.

5. Procédé selon l'une quelconque des revendications 1 à 4, **caractérisé en ce que** les compresseurs sont identiques.

6. Procédé selon l'une quelconque des revendications 1 à 5, **caractérisé en ce qu'**en cas de panne d'un compresseur, le convertisseur de fréquence n'est plus associé à celui-ci.

7. Procédé selon l'une quelconque des revendications 1 à 6, **caractérisé en ce qu'**en cas de panne du ou d'un convertisseur de fréquence, les compresseurs associés au convertisseur de fréquence en panne sont reliés au réseau fixe ou sont associés à un autre convertisseur de fréquence.

8. Procédé selon l'une quelconque des revendications 1 à 7, **caractérisé en ce qu'**au moins l'un des compresseurs peut être exploité avec un réglage par paliers, de préférence au moyen d'une déconnexion des cylindres.

9. Ensemble de compresseurs, formé par au moins deux compresseurs, actionnés par des moteurs électriques, sachant qu'il est prévu au moins un convertisseur de fréquence, **caractérisé en ce que** ledit au moins un convertisseur de fréquence est apte à faire tourner le moteur électrique de l'un des compresseurs dans un montage en delta avec une ligne caractéristique tension-fréquence constante, au moins à la fréquence du réseau, et un autre des compresseurs est exploité sur le réseau fixe, l'association du convertisseur de fréquence aux compresseurs étant effectuée en alternance par une commande.

10. Ensemble de compresseurs selon la revendication 9, **caractérisé en ce qu'**il est prévu au moins un convertisseur de fréquence qui peut faire tourner le moteur électrique d'un compresseur jusqu'à au moins la racine du triple de la fréquence du réseau fixe.

11. Ensemble de compresseurs selon la revendication 9 ou 10, **caractérisé en ce que** le ou les convertisseur(s) de fréquence prévu(s) peuvent être au moins temporairement associés en alternance aux compresseurs.

12. Ensemble de compresseurs selon l'une quelconque des revendications 9 à 11, **caractérisé en ce qu'**en cas de présence de quatre compresseurs ou plus, il est prévu deux convertisseurs de fréquence ou plus, et chaque convertisseur de fréquence peut être associé en alternance à respectivement au moins deux compresseurs.

13. Ensemble de compresseurs selon l'une quelconque des revendications 9 à 12, **caractérisé en ce que** les compresseurs sont identiques.

14. Ensemble de compresseurs selon l'une quelconque des revendications 9 à 13, **caractérisé en ce qu'**au moins l'un des compresseurs peut être exploité avec un réglage par paliers, de préférence au moyen d'une déconnexion des cylindres.
